# EUROPÄISCHE PATENTSCHRIFT

(11) **EP 0 688 878 B1**
(45) Veröffentlichungstag und Bekanntmachung des Hinweises auf die Patenterteilung: **07.08.2002**
(21) Anmeldenummer: 95107049.9
(22) Anmeldetag: 10.05.1995
(51) Int. Cl.: C21D 9/50, C21D 1/667

(54) **Verfahren zur Nachbehandlung geschweisster Platinen**
Process for post-treating welded plates
Procédé pour le post-traitement de tôles soudées

(30) Priorität: 23.06.1994 CH 200194
(43) Veröffentlichungstag der Anmeldung: 27.12.1995
(73) Patentinhaber: ELPATRONIC AG, 8962 Bergdietikon (CH)
(72) Erfinder: Urech, Werner, CH-8434 Kaiserstuhl (CH)

(56) Entgegenhaltungen:
- EP-A- 0 262 363
- WO-A-86/05210
- DE-B- 1 159 480
- DE-B- 2 942 868
- FR-A- 1 536 983
- FR-A- 2 138 243
- US-A- 3 855 014

## Beschreibung

Die Erfindung betrifft ein Verfahren zur Herstellung von Platinen gemäß Oberbegriff des Anspruchs 1.

Insbesondere für die Automobilindustrie, aber auch für andere Anwendungen, werden mehr und mehr Blechtafeln (sog. Platinen oder tailored blanks) gefertigt, die aus mehreren ebenen Blechteilen gleicher oder unterschiedlicher Dicke zusammengesetzt sind, z.B. durch Rollnaht- oder Laserschweissung. Diese Blechtafeln werden durch Umformung zu einem Konstruktionsbauteil, z.B. einem Automobil-Karosserieteil, geformt, das aufgrund einer abschnittsweise unterschiedlichen Materialstärke oder Materialeigenschaft genau definierte Eigenschaften aufweist. Die Blechtafeln werden dabei in grossen Anlagen umfassend Schweissautomaten, Fördereinrichtungen und Lagerstationen weitgehend automatisch und in hoher Kadenz gefertigt.

Nach der Schweissung werden die Schweissnahtbereiche mit einem Rostschutzöl und allenfalls noch mit einer Bürste behandelt. Zur Aufbringung des Oels wird abgewartet, bis die Schweissnaht eine Temperatur von 100°C oder geringer erreicht hat, damit ein Verdampfen oder sogar Verbrennen des Oels vermieden wird. Da die Bleche beim Schweissen auf annähernd Schmelztemperatur (im Bereich von 1500°C) erwärmt werden und nach dem Verlassen der Schweissrollen noch eine Temperatur von 1000-1200° C aufweisen, muss eine minimale Abkühlzeit von ca. 3 bis 5 Minuten beim Bau der Schweisslinie berücksichtigt werden, d.h. es muss eine bestimmte Pufferstrecke oder sogar ein Zwischenlager zwischen der Schweissstation und der Oelstation vorgesehen werden; dies führt zu langen und komplexen Anlagen.

DE-A-294 28 68 zeigt das Kühlen des Schweissbereiches beim Auftragsschweissen nach dem Unterpulverschweissverfahren.

Es ist daher Aufgabe der Erfindung, ein Verfahren zur Herstellung von Platinen zu schaffen, welches diese Nachteile nicht aufweist, und welches rasch und ohne grossen Platzbedarf zu rostschutzbehandelten Platinen führt.

Diese Aufgabe wird mit den Merkmalen des kennzeichnenden Teils des Anspruchs 1 gelöst.

Dadurch, dass die Platine durch ein Rostschutzöl oder eine Oel/Wasser-Emulsion abgekühlt wird, kann die Abkühlzeit auf einen Bruchteil der bisher benötigten Zeit reduziert werden. Lange Pufferstrecken und Zwischenlager vor der Oelung entfallen somit. Die Schweissnahttemperatur liegt bei ungefähr 150 bis 300°C, wenn das Fluid aufgebracht wird. Diese Temperatur wird nach der Schweissung relativ rasch erreicht, abhängig von der Blechkombination.

Mit anderen Worten, die Bleche werden aus der Schweissmaschine herausgefördert und unmittelbar - vorzugsweise beidseits oder auch nur einseitig - mit genügend Oel auf den Nahtbereich beaufschlagt, so dass die Naht und die unmittelbare Umgebung rasch auf 100°C oder weniger abkühlt. Das überschüssige Oel wird durch Abstreifen und/oder Absaugen entfernt. Die entstehenden Dämpfe und allenfalls geringe Rauchanteile werden vorzugsweise abgesaugt. Eine unerwünschte Aufhärtung der Naht erfolgt infolge der relativ tiefen Abschrecktemperatur nicht. Auch der üblicherweise tiefe Kohlenstoffgehalt der Bleche verhindert die Aufhärtung. Die Naht verlässt dann die Oelaufbringungsstation geölt und in nicht mehr dampfendem Zustand.

Vorzugsweise wird das Fluid, welches ein Rostschutzöl oder eine Oel/Wasser-Emulsion ist, bereits bei einer Temperatur der Schweissnaht aufgebracht, die 1,5 bis 3 mal so hoch wie die Verdampfungstemperatur des Fluids ist.

Es kann ein Bürsten nach und/oder während der Fluidabkühlung stattfinden, wobei dies ein Waschen mit einer relativ weichen Bürste (z.B. Nylon, Messing oder Bronze als Borstenmaterial) beinhaltet. Infolge der grossen aufgebrachten Fluidmenge zur Abkühlung erfolgt indes durch dieses Fluid auch eine recht gute Waschung, so dass sogar auf das Bürsten verzichtet werden kann.

Vor dem Aufbringen des Fluids wird die Naht vorzugsweise mit einer Glättrolle geglättet. Diese Rolle kann gekühlt sein (z.B. mit einer Wasserkühlung), was eine Beschleunigung der Abkühlung von der Schweisstemperatur bis zur Fluidaufbringtemperatur ergibt.

Ferner kann vor dem Aufbringen des Fluids eine Grobreinigung bzw. eine abrasive Reinigung der Schweissnaht erfolgen, z.B. mit einer Drahtbürste, um Schweissspritzer zu entfernen.

Im folgenden werden Ausführungsbeispiele der Erfindung anhand der Zeichnungen näher erläutert. Dabei zeigt
Figur 1 grob schematisch einen Vertikalquerschnitt durch ein Ausführungsbeispiel einer Vorrichtung zur Durchführung des Verfahrens;
Figur 2 ebenfalls nur schematisch eine Ansicht eines bevorzugten Ausführungsbeispiels einer weiteren Vorrichtung zur Durchführung des Verfahrens;
Figur 3 ein weiteres Ausführungsbeispiel einer Vorrichtung im Vertikalschnitt, sowie
Figur 4 ebenfalls ein Ausführungsbeispiel einer Vorrichtung im Vertikalschnitt.

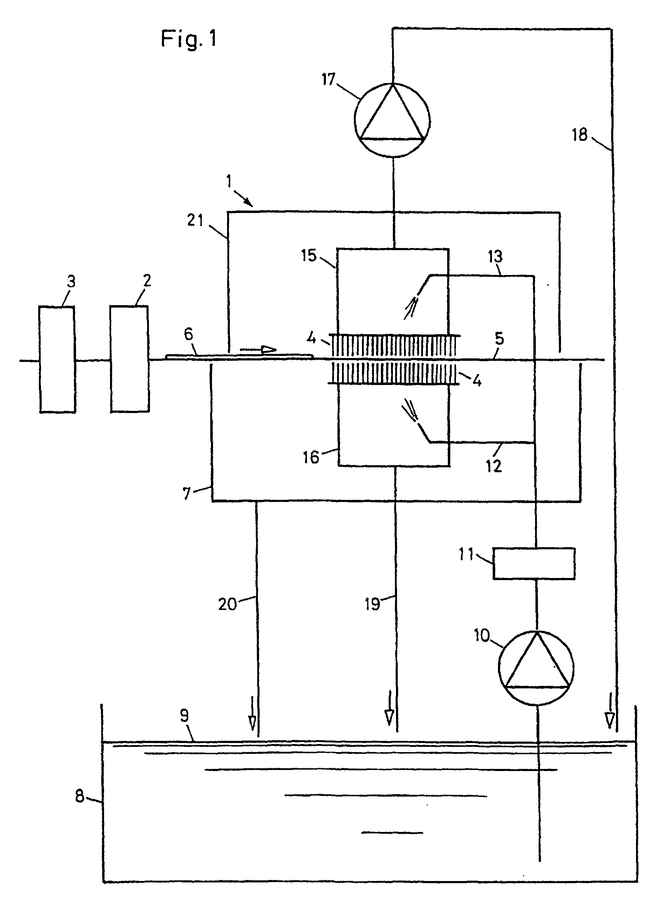

Figur 1 zeigt grob schematisch eine Oelaufbringungsstation 1 für ein geschweisstes Blech bzw. eine Platine 6. Diese Platine 6 ist vorgängig in einer nur als Block dargestellten Schweissmaschine 3 geschweisst worden. Bei der Schweissmaschine 3 handelt es sich um eine Rollnahtschweissvorrichtung oder um eine Laserschweissvorrichtung. Nach der Schweissmaschine 3 kann eine Glättungs- und Bürsteinrichtung 2 angeordnet sein. Diese ist in Figur 1 ebenfalls nur als Kasten 2 dargestellt, da ebenfalls grundsätzlich bekannt. In dieser Einrichtung 2 wird die Schweissnaht mittels einer Rolle geglättet und es werden mit einer Drahtbürste grobe Verunreinigungen der Schweissnaht, wie z.B. Spritzer, entfernt. Die geschweisste Platine 6 gelangt dann auf einer Förderanlage 5, welche nicht näher dargestellt ist, in die Oelaufbringungsstation 1. Dabei kann die Platine 6 ungefähr 20 Sekunden nach dem Verschweissen bereits in der Oelaufbringungsstation 1 eingeführt sein, da zu diesem Zeitpunkt die Temperatur der Schweissnaht auf ca. 200°C gefallen ist. Wenn eine Glättungs- und Bürsteinrichtung 2 vorgesehen ist, so kann der Zeitraum bis zur Einführung in die Oelaufbringungsstation 1 sogar noch geringer sein. Es kann z.B. eine wassergekühlte Glättungsrolle verwendet werden, welche das Abkühlen der Schweissnaht der Platine 6 beschleunigt. Es könnte auch am Ende der Schweissmaschine 3 oder zwischen der Schweissmaschine und der Glättungseinrichtung 2 oder in oder nach der Glättungseinrichtung 2 eine zusätzliche Kühlung der Schweissnaht vorgesehen sein, z.B. mittels eines Luftstromes. Jedenfalls, auch wenn die Platine 6 direkt aus der Schweissmaschine 3 nach kurzem Förderweg in die Oelaufbringungsstation 1 gelangt, ergibt sich nachfolgend ein wesentlich kürzerer Abkühlungsvorgang als bei herkömmlichen, bekannten Methoden, wo mit der Oelung des Bleches mindestens 3-5 Minuten zugewartet wird, bis das Blech eine Temperatur von 100°C oder weniger erreicht hat. Gemäss der Erfindung wird nämlich die Platine 6 in der Oelaufbringungsstation 1 mit einem Fluid beaufschlagt, welches die rasche Kühlung der Schweissnaht der Platine 6 bewirkt. Zu diesem Zweck ist beim gezeigten Beispiel ein Tank 8 vorgesehen, in welchen sich eine grössere Menge des Fluids 9 befindet. Bei dem Fluid handelt es sich um normales Rostschutzöl, wie es auch nach der normalen, langen Abkühlphase verwendet wird. Anstelle des handelsüblichen Rostschutzöles 9, könnte auch eine Oel/ Wasser-Emulsion verwendet werden, wie sie ebenfalls bekannt und handelsüblich ist.

In dem gezeigten Beispiel wird das Fluid 9 mittels einer Pumpe 10 durch einen Filter 11 in zwei Zuführungsleitungen 12 und 13 gepumpt. Die Zuführungsleitungen 12 und 13 entlassen das Fluid jeweils auf die Schweissnaht der Platine 6, welche von der Förderanlage 5 durch eine Spritzglocke 15, 16 hindurchgeführt wird, in welcher Spritzglocke das Fluid auf die Schweissnaht trifft. Die beiden Hälften 15, 16 der Spritzglocke sind dabei gegenüber der Förderanlage 5 mit Bürstenvorhängen 4 abgedichtet, welche das Einfahren der Platine 6 in den Spritzglockenbereich erlauben und welche das innerhalb der Spritzglocke auf die Naht gespritzte Oel möglichst weitgehend am Austritt aus der Spritzglocke hindern. Austretendes Fluid wird einerseits in einer Wanne 7 aufgefangen und durch einen Auslass 20 zurück in den Tank gefördert. Das innerhalb der Spritzglocke 15, 16 überschüssige Oel wird einerseits durch einen Auslass 19 zurück in den Tank gefördert und andererseits durch eine Oel- und Rauchabsaugung mit einer Pumpe 17 durch eine Leitung 18 zurück in den Tank 8 gefördert. Das innerhalb der Spritzglocke von beiden Seiten auf die heisse Naht geschwemmte oder gespritzte Fluid bewirkt eine rasche Abkühlung der heissen Naht auf eine Temperatur von unter 100°, bei welcher in der Regel keine Verdampfung des Fluids mehr auftritt. Das Blech verlässt deshalb die Station 1 abgekühlt und geölt und kann danach weiter verwendet oder zwischengelagert werden. Nach der Oelaufbringungsstation 1 kann noch eine Bürststation angeordnet sein, bei welcher eine relativ weiche Reinigungsbürste die Schweissnaht weiter reinigt.

Das Fluid 9 im Tank 8 kann durch eine Kühleinrichtung gekühlt werden. Es kann aber auch eine so grosse Menge Fluid 9 vorgesehen sein, dass sich eine genügende Kühlung durch die Abstrahlung des Tanks selber ergibt. Durch das Aufschwemmen oder Aufspritzen des Fluids auf die Schweissnaht der Platine 6 ergibt sich auch eine gewisse Reinigungswirkung für die Schweissnaht. Es ist deshalb bevorzugt, dass das Fluid jeweils durch einen Filter 11 gefördert wird, in welchem Verunreinigungen aufgefangen werden.

Durch die Kühlung mit dem Fluid, welches auf die Schweissnaht aufgebracht wird, die eine Temperatur deutlich oberhalb der Verdampfungstemperatur des Fluids aufweist, ergibt sich also eine sehr rasche und damit auf kleinem Förderweg erfolgende Temperaturverringerung der Schweissnaht. Dabei entstehender Fluiddampf und allenfalls sogar Fluidrauch wird abgesaugt und innerhalb der Station 1 wieder in den Fluidtank zurückgeführt. Die Station 1 ist also in sich selber abgeschlossen und erlaubt das Einführen einer frisch verschweissten Platine 6 am einen Ende und die Entnahme einer geölten und abgekühlten Platine am anderen Ende. Dabei nimmt sie gegenüber den herkömmlichen langen Abkühlungswegen oder gar Abkühlungszwischenlagern nur wenig Raum ein. Da die Abkühlung des Fluids erst bei einer relativ geringen Temperatur im Bereiche von 150-300° einsetzt, ergibt sich durch das rasche Abschrecken der Schweissnaht keine Versprödung oder Aufhärtung derselben.

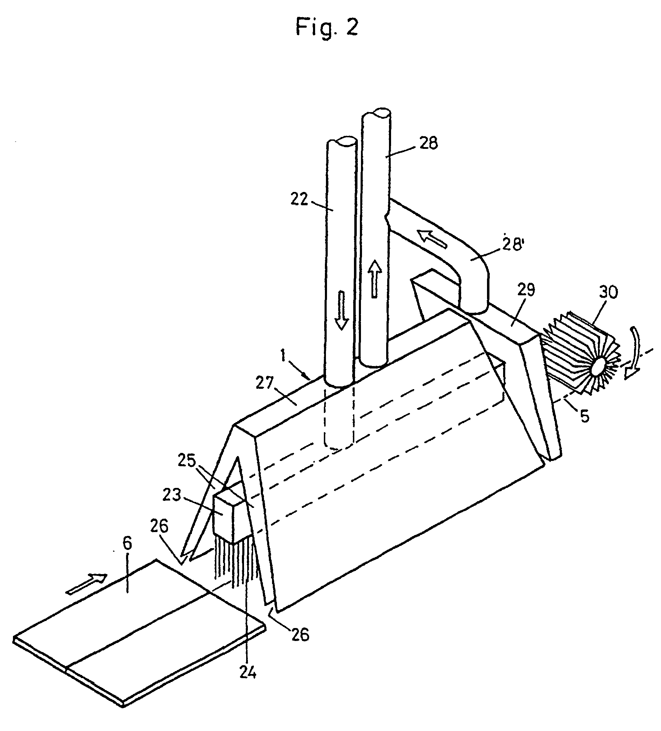

Figur 2 zeigt eine weitere Ausführungsform der Oelaufbringungsstation 1. Dabei ist nur der oberhalb der Platine 6 bzw. der Förderanlage 5 vorgesehene Teil der Station 1 dargestellt, nicht aber der vorzugsweise auch vorhandene unterhalb der Platine 6 angeordnete Teil. Ferner sind in der Figur 2 auch der Fluidtank 8, die Pumpe 10 und der Filter 11 nicht gezeigt. Dargestellt ist eine aus dem Fluidtank gespiesene Oelzufuhr, welche oberhalb der Platine 6 in ein Verteilelement 23 mündet, welches das zugeführte Fluid in Längsrichtung der Naht verteilt. Das Fluid tritt dabei entlang der ganzen Länge des Verteilelementes 23 z.B. zwischen den Borsten einer Bürste 24 aus und gelangt auf die Schweissnaht der Platine 6. Beidseits der Schweissnaht sind Fluidsammelelemente 25 angeordnet, welche jeweils einen parallel zur Schweissnaht verlaufenden Saugschlitz 26 aufweisen, der jeweils an der Platine aufliegt oder in geringem Abstand von dieser angeordnet ist. Von einem zentralen Sammelkanal 27 gelangt das Fluid in eine Fluidrückführungsleitung 28, die wiederum in den Tank zurückführt. In Förderrichtung der Platine am Ende des Aufbringelementes 23 ist ein Abstreif- und Absaugelement 29 quer zur Förderrichtung angeordnet, welches an der Platine anliegend oder ein wenig beabstandet von derselben mit mindestens einem Absaugschlitz versehen ist. Von diesem Element 29 führt eine Leitung 28' ebenfalls zurück in den Tank. Eine Bürste 30 kann nach dem Element 29 zur Nachbehandlung der Naht vorgesehen sein. Unterhalb der Platine 6 sind vorzugsweise dieselben Elemente angeordnet wie in der Figur 2 oberhalb der Platine gezeigt.

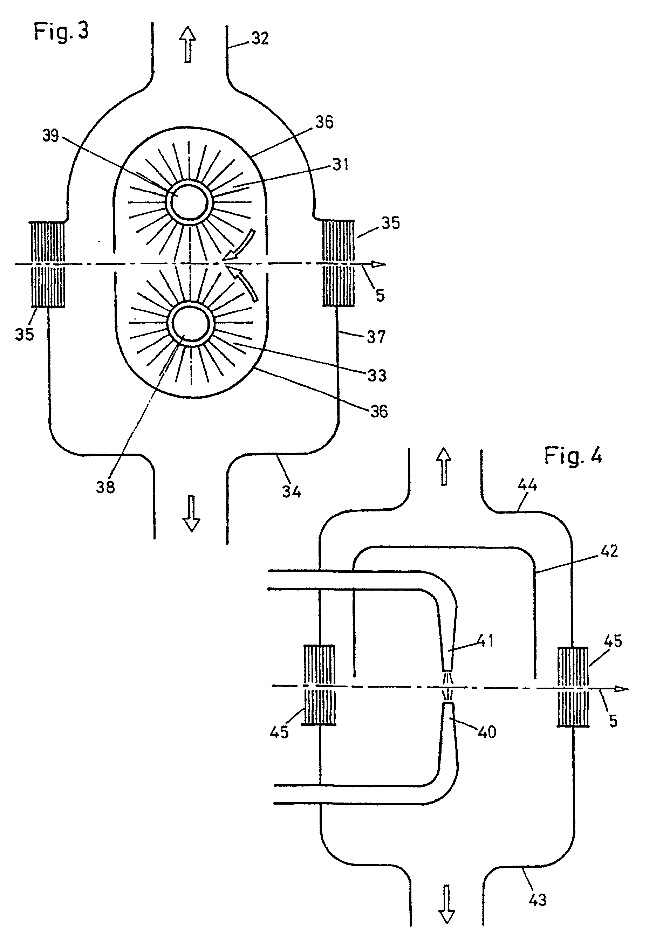

Figur 3 zeigt eine weitere Ansicht einer Oelaufbringungsstation 1, wobei hier die Platine auf der Förderanlage 5 durch Bürstenvorhänge 35 in die Einrichtung hineingelangt und danach zwischen zwei rotierende Bürsten 31 bzw. 33 gelangt. Im Zentrum 39 bzw. 38 der Bürsten erfolgt die Fluidzufuhr, welche in Figur 3 nicht näher gezeigt ist. Dabei wird aber ebenfalls Fluid mittels einer Pumpe aus einem Tank über Zuführleitungen in das Zentrum der Bürsten 31 bzw. 33 geleitet. Das Fluid gelangt auf diese Weise ebenfalls auf die Schweissnaht und wird von den gegenläufigen Bürsten zusätzlich auf dieser verteilt. Ein Spritzschutz 36 sorgt dafür, dass das Fluid im wesentlichen innerhalb des Bürstenbereichs verbleibt. Eine untere Ablaufglocke 34 führt das überschüssige Fluid zurück in den Tank. Eine Absaugglocke 32 oben führt über eine Pumpe ebenfalls Fluid, Fluiddämpfe sowie Fluidrauch zurück in den Tank. Die geölten und gebürsteten Bleche verlassen die Station 1 durch einen weiteren Bürstenvorhang 35 auf der Förderanlage 5.

Figur 4 zeigt eine weitere Ausführungsform der Station 1, wobei hier Flachspritzdüsen 41 und 40 vorgesehen sind, welche die Naht der auf der Förderanlage 5 in die Station 1 hineingeführten Platine 6 besprühen. Einführung und Auslass der Platine erfolgen durch Bürstenvorhänge 45 hindurch. Oberhalb der Düse 41 ist ein Spritzschutz 42 angeordnet. Eine Ablaufglocke 43 mit einem in den Tank führenden Auslass führt überschüssiges Fluid zurück in den Tank. Gleiches erfolgt über eine Absaugglocke 44, welche zudem Fluiddampf und Fluidrauch in den Tank zurückführt.

Auch bei den in den Figuren 2-4 gezeigten Vorrichtungen kann jeweils zwischen der Schweissmaschine und der Station 1 eine Glättungs- und Bürsteinrichtung 2 vorhanden sein. Ebenso kann nach dem Austritt der Platine 6 aus dem Bürstenvorhang 35 oder 45 eine Bürststation mit einer oder mehreren Bürsten zum Reinigen der Bleche vorgesehen sein. Ebenso kann, sofern dies gewünscht ist, eine zusätzliche Oelstation nach der Oelaufbringungsstation 1 angeordnet sein, in welcher noch zusätzlich Rostschutzöl auf das Blech, welches ja nun abgekühlt ist, aufgebracht wird.

## Patentansprüche

1. Verfahren zur Herstellung von Platinen (6), bei welchem Bleche in einer Schweissmaschine (3) durch Rollnahtschweissen oder Laserschweissen entlang einer Schweissnaht zu einer Platine verbunden werden, wobei beim Schweissen eine Erwärmung der Bleche auf ca. 1500°C erfolgt und die Platinen nachfolgend zu einer Oelaufbringungsstation (1) gefördert werden, **dadurch gekennzeichnet, dass** die Oelung der Schweissnaht durch das Aufbringen eines Rostschutzoels oder einer Oel/Wasser-Emulsion bei einer Schweissnahttemperatur von 300°C bis 150°C beginnt und bei einer Schweissnahttemperatur von 100°C oder weniger beendet wird, und dass überschüssiges Oel oder Emulsion durch Abstreifen und/oder Absaugen entfernt wird.

2. Verfahren nach Anspruch 1, **dadurch gekennzeichnet, dass** das Oel oder die Emulsion bei einer Schweissnahttemperatur aufgebracht wird, welche höher als die Verdampfungstemperatur des Oels oder der Emulsion liegt.

3. Verfahren nach Anspruch 1 oder 2, **dadurch gekennzeichnet, dass** die Oel- oder Emulsionsaufbringung bei einer Schweissnahttemperatur beginnt, die ungefähr 1,5 bis 3 mal so hoch wie die Verdampfungstemperatur liegt.

4. Verfahren nach einem der Ansprüche 1 bis 3, **dadurch gekennzeichnet, dass** die Oel- oder Emulsionsaufbringung im Bereich von ungefähr 5 Sek. bis 30 Sek. nach der Schweissung beginnt.

5. Verfahren nach einem der vorangehenden Ansprüche, **dadurch gekennzeichnet, dass** direkt nach dem Schweissen eine Vorkühlung der Naht auf die Aufbringtemperatur erfolgt.

6. Verfahren nach Anspruch 5, **dadurch gekennzeichnet, dass** die Vorkühlung durch eine gekühlte Glättrolle zur Nahtglättung und/oder durch ein Anblasen der Naht mit einem Kühlgas, z.B. Luft, erfolgt.

7. Verfahren nach einem der Ansprüche 1 bis 6, **dadurch gekennzeichnet, dass** der Nahtbereich nur einseitig oder beidseits der Platine gekühlt wird.

8. Verfahren nach einem der Ansprüche 1 bis 7, **dadurch gekennzeichnet, dass** das Aufbringen von Fluid derart erfolgt, dass die Schweissnaht den Aufbringbereich im wesentlichen nicht mehr dampfend verlässt.

9. Verfahren nach einem der Ansprüche 1 bis 8, **dadurch gekennzeichnet, dass** vor dem Aufbringen des Fluids eine mechanische Behandlung des Schweissbereiches erfolgt, z.B. mittels einer Drahtbürste, womit zumindest grobe Schweissverunreinigungen entfernt werden.

10. Verfahren nach einem der Ansprüche 1 bis 9, **dadurch gekennzeichnet, dass** während oder nach der Fluidaufbringung eine Reinigungsbehandlung, z.B. mit einer Bürste, erfolgt.

## Claims

1. Method for the manufacture of tailored blanks (6) wherein metal sheets are joined in a welding machine (3) by roller seam welding or laser welding along a weld seam to form a tailored blank, the sheets being heated to approx. 1500°C during welding and the tailored blanks subsequently being conveyed to an oil application station (1), **characterized in that** oiling of the weld seam by application of a rust-preventative oil or of an oil/water emulsion commences at a weld seam temperature of 300°C to 150°C and is ended at a weld seam temperature of 100°C or lower, and **in that** excess oil or emulsion is removed by wiping and/or suction.

2. Method according to Claim 1, **characterized in that** the oil or emulsion is applied at a weld seam temperature which is higher than the vaporization temperature of the oil or emulsion.

3. Method according to Claim 1 or Claim 2, **characterized in that** the application of oil or emulsion commences at a weld seam temperature which is approximately 1.5 to 3 times the vaporization temperature.

4. Method according to any one of Claims 1 to 3, **characterized in that** the application of oil or emulsion commences within a range of approximately 5 sec. to 30 sec. after welding.

5. Method according to any one of the preceding claims, **characterized in that** directly after welding, the seam is precooled to the application temperature.

6. Method according to Claim 5, **characterized in that** precooling is effected by a cooled smoothing roll for smoothing the seam and/or by blasting the seam with a cooling gas, e.g. air.

7. Method according to any one of Claims 1 to 6, **characterized in that** the seam zone is cooled on one side only or both sides of the tailored blank.

8. Method according to any one of Claims 1 to 7, **characterized in that** the application of fluid is managed so that the weld seam is no longer giving off a significant amount of vapour on leaving the application area.

9. Method according to any one of Claims 1 to 8, **characterized in that** before the application of the fluid a mechanical treatment of the weld zone is performed e.g. by means of a wire brush, to remove at least coarse weld impurities.

10. Method according to any one of Claims 1 to 9, **characterized in that** a cleaning treatment, e.g. with a brush, is performed during or after the application of fluid.

## Revendications

1. Procédé d'élaboration de platines (6), selon lequel des tôles sont, dans une machine à souder (3), réunies de façon à former une platine par soudage en cordon par rouleau ou soudage laser le long d'un cordon de soudure, tandis que, lors du soudage, une élévation de température des tôles jusqu'à environ 1500 °C a lieu et les platines sont ensuite envoyées à un poste (1) d'application d'huile, **caractérisé en ce que** la lubrification à l'huile du cordon de soudure au moyen de l'application d'une huile antirouille ou d'une émulsion huile/eau commence à une température de cordon de soudure de 300 °C à 150 °C et se termine à une température de cordon de soudure de 100 °C ou moins, et **en ce que** l'huile ou émulsion en excès est ôtée par enlèvement et/ou aspiration.

2. Procédé suivant la revendication 1, **caractérisé en ce que** l'huile ou l'émulsion est appliquée à une température de cordon de soudure qui est supérieure à la température de vaporisation de l'huile ou de l'émulsion.

3. Procédé suivant la revendication 1 ou 2, **caractérisé en ce que** l'application d'huile ou d'émulsion commence à une température de cordon de soudure qui est environ 1,5 à 3 fois plus élevée que la température de vaporisation.

4. Procédé suivant l'une des revendications 1 à 3, **caractérisé en ce que** l'application d'huile ou d'émulsion commence dans la fourchette d'environ 5 secondes à 30 secondes après le soudage.

5. Procédé suivant l'une des revendications précédentes, **caractérisé en ce qu'**un pré-refroidissement du cordon jusqu'à la température d'application a lieu immédiatement après le soudage.

6. Procédé suivant la revendication 5, **caractérisé en ce que** le pré-refroidissement a lieu au moyen d'un rouleau de lissage refroidi, servant à lisser le cordon, et/ou au moyen du soufflage d'un gaz de refroidissement, par exemple d'air, sur le cordon.

7. Procédé suivant l'une des revendications 1 à 6, **caractérisé en ce que** la zone du cordon est refroidie uniquement d'un côté ou des deux côtés de la platine.

8. Procédé suivant l'une des revendications 1 à 7, **caractérisé en ce que** l'application de fluide a lieu d'une manière telle que le cordon de soudure quitte la zone d'application en ne dégageant essentiellement plus de vapeur.

9. Procédé suivant l'une des revendications 1 à 8, **caractérisé en ce qu'**un traitement mécanique de la zone de soudure a lieu, par exemple au moyen d'une brosse métallique, avant l'application du fluide, afin qu'au moins des impuretés de soudage grossières soient ôtées.

10. Procédé suivant l'une des revendications 1 à 9, **caractérisé en ce qu'**un traitement de nettoyage, par exemple au moyen d'une brosse, a lieu pendant ou après l'application de fluide.
